# EUROPEAN PATENT APPLICATION

(11) **EP 4 757 044 A1**
(43) Date of publication of application: **10.06.2026**
(21) Application number: 24863283.8
(22) Date of filing: 06.09.2024
(51) Int. Cl.: H01M 50/502, H01M 50/519, H01M 50/574, H01R 25/14, H01H 85/00

(54) **BATTERY MODULE**

(30) Priority: 08.09.2023 KR 20230119963; 13.05.2024 KR 20240062385
(71) Applicant: LG Energy Solution, Ltd., Seoul 07335 (KR)
(72) Inventor: KIM, Seok Hee, Daejeon 34122 (KR); KWON, Hee Yong, Daejeon 34122 (KR); AN, Seong Woo, Daejeon 34122 (KR)
(74) Representative: Plasseraud IP
(86) International application number: PCT/KR2024/013560
(87) International publication number: WO 2025/053704

(57) **Abstract**

A battery module according to the present disclosure includes a busbar, a busbar frame on which the busbar is mounted, a substrate including a first substrate extension portion connected to the busbar and supported by the busbar frame, a substrate bending portion bent from an end portion of the first substrate extension portion, and a second substrate extension portion extended from the substrate bending portion, wherein the substrate forms an internal space surrounded by the first substrate extension portion, the substrate bending portion and the second substrate extension portion, a fuse mounted on the second substrate extension portion, and protruded toward the internal space, and a guide structure including a barrier portion located in the internal space to prevent contact between the fuse and the first substrate extension portion.

## Description

### TECHNICAL FIELD

### CROSS-REFERENCE TO RELATED APPLICATIONS

The present application claims priority to Korean Patent Application No. 10-2023-0119963 filed on September 8, 2023 and Korean Patent Application No. 10-2024-0062385 filed on May 13, 2024 in the Republic of Korea, the disclosures of which are incorporated herein by reference.

### TECHNICAL FIELD

The present disclosure relates to a battery module. More particularly, the present disclosure relates to a battery module including a substrate connected to a busbar.

### BACKGROUND ART

With the technology development and growing demand for electric vehicles and mobile devices, the demand for secondary batteries as an energy source is increasing. As opposed to primary batteries that can only be used once, secondary batteries can be reused through charging. A secondary battery includes a positive electrode and a negative electrode. When oxidation of a metal occurs at a positive electrode, electricity is produced by movement of electrons released from the metal. The oxidized metal at the positive electrode moves to the negative electrode through an electrolyte and reduction occurs at the negative electrode.

To manufacture a secondary battery, first, an electrode active material slurry is applied to a positive current collector and a negative current collector to manufacture a positive electrode and a negative electrode, and the positive electrode and the negative electrode are stacked on two sides of a separator to form an electrode assembly. Additionally, the electrode assembly is received in a battery case, an electrolyte is injected into the battery case, and the battery case is sealed.

The types of secondary batteries being currently widely used include lithium-ion batteries, lithium polymer batteries, nickel cadmium batteries, nickel hydrogen batteries, nickel zinc batteries and so on. Additionally, an operating voltage of a unit secondary battery has is about 2.5 V to 4.2 V.

Accordingly, when higher output voltage is required, a plurality of secondary batteries is connected to form a battery module, and a plurality of battery modules is put together to form a battery pack.

For the electrical connection of the secondary batteries in the battery module, electrode leads are connected to each other, and to keep them in the connected state, the connected parts are welded. Moreover, the battery module may have parallel and/or series electrical connection between the secondary batteries, and to this end, an end portion of the electrode lead is fixed in contact with a busbar for electrical connection between each secondary battery by welding.

Additionally, in many cases, the electrical connection between the secondary batteries is made by joining the electrode leads to the busbars. In this instance, to electrically connect the secondary batteries in parallel, the electrode leads of the same polarity are connected and joined to each other, and to electrically connect the secondary batteries in series, the electrode leads of different polarity are connected and joined to each other. In other words, the busbars are electrically connected to the plurality of electrode leads of the plurality of secondary batteries and play a role in outputting electrical energy or collecting an electrical signal of each secondary battery.

The battery module may have the output voltage of a different value from a preset value by external factors or unintended reaction. To control this, the battery module may be electrically connected to a Battery Management System (BMS). To detect the output voltage from the battery module, a substrate included in the battery module is connected to a connector, through which the substrate of the battery module is electrically connected the BMS, and the BMS may detect the electrical signal of the battery module and control the battery module.

The substrate of the battery module may be folded due to the limited space. The facing parts of the folded substrate may contact each other by the gravity or impacts, and in this process, damage may occur to the substrate.

Further, when a fuse is mounted on the substrate, damage may occur to the fuse by the contact between the fuse and the substrate.

### SUMMARY

### TECHNICAL PROBLEM

The present disclosure is designed to solve the above-described problems, and therefore the present disclosure is directed to providing a battery module for preventing adjacent parts from coming into contact with each other when a substrate is folded.

The present disclosure is further directed to providing a battery module for preventing contact between a fuse and a portion of a substrate adjacent to the fuse when the fuse is mounted on the substrate.

The technical problems to be solved by the present disclosure are not limited to the aforementioned technical problems, and these and other technical problems will be clearly understood by persons having ordinary skill in the technical field pertaining to the present disclosure from the following description.

### TECHNICAL SOLUTION

A battery module according to an embodiment of the present disclosure includes a busbar, a busbar frame on which the busbar is mounted, a substrate including a first substrate extension portion connected to the busbar and supported by the busbar frame, a substrate bending portion bent from an end portion of the first substrate extension portion, and a second substrate extension portion extended from the substrate bending portion, wherein the substrate forms an internal space surrounded by the first substrate extension portion, the substrate bending portion and the second substrate extension portion, a fuse located at the second substrate extension portion, and facing the internal space, and a guide structure including a barrier portion located in the internal space to prevent contact between the fuse and the first substrate extension portion.

A battery module according to an embodiment of the present disclosure includes a busbar frame on which a busbar is mounted, the busbar frame including a frame body and a support rib extended from the frame body, a substrate including a first substrate extension portion supported by the support rib, a second substrate extension portion extended parallel to the first substrate extension portion and located above the first substrate extension portion, and a substrate bending portion connecting the first substrate extension portion to the second substrate extension portion, and a guide structure including a barrier portion located between the first substrate extension portion and the second substrate extension portion to prevent contact between the second substrate extension portion and the first substrate extension portion.

A battery module according to an embodiment of the present disclosure includes at least one secondary battery, a busbar configured to be electrically connected to the plurality of secondary batteries, a busbar frame configured to mount the busbar, and including a frame body, a support rib extended frontward from the frame body to support the busbar from above, and a space forming rib extended frontward from the frame body to form a space between the space forming rib and the support rib, a substrate including a first substrate extension portion configured to be electrically connected to the busbar and supported by the support rib, and a second substrate extension portion adjacent to the space forming rib and facing the first substrate extension portion, a fuse mounted on the second substrate extension portion, and protruded toward the first substrate extension portion, and a guide structure including a barrier portion located between the first substrate extension portion and the second substrate extension portion to prevent contact between the fuse and the first substrate extension portion.

### ADVANTAGEOUS EFFECTS

There is provided the battery module according to the present disclosure including the substrate including the first substrate extension portion, the substrate bending portion bent from the end portion of the first substrate extension portion, and the second substrate extension portion extended from the substrate bending portion, wherein the substrate forms the internal space surrounded by the first substrate extension portion, the substrate bending portion and the second substrate extension portion, the fuse mounted on the second substrate extension portion and protruded toward the internal space, and the guide structure including the barrier portion located in the internal space to prevent the contact between the fuse and the first substrate extension portion, thereby preventing the contact between the fuse and the part of the substrate adjacent to the fuse.

There is provided the battery module according to the present disclosure including the substrate including the first substrate extension portion, the second substrate extension portion extended parallel to the first substrate extension portion and located above the first substrate extension portion and the substrate bending portion connecting the first substrate extension portion to the second substrate extension portion, and the guide structure including the barrier portion located between the first substrate extension portion and the second substrate extension portion to prevent the contact between the second substrate extension portion and the first substrate extension portion, thereby preventing the adjacent parts from coming into contact with each other when the substrate is folded.

The effects that can be obtained from the present disclosure are not limited to the aforementioned effects, and these and other effects will be clearly understood by persons having ordinary skill in the technical field pertaining to the present disclosure from the following description.

### BRIEF DESCRIPTION OF THE DRAWINGS

FIG. 1 is a perspective view of a battery module according to a first embodiment of the present disclosure.
FIG. 2 is an exploded view of the battery module shown in FIG. 1 from which a module case is removed.
FIG. 3 is an enlarged exploded view of components adjacent to a busbar in the battery module shown in FIG. 2.
FIG. 4 is an enlarged exploded view of the battery module shown in FIG. 3 when viewed from a different angle.
FIG. 5 is an enlarged perspective view of the battery module shown in FIG. 1.
FIG. 6 is a cross-sectional view of the battery module shown in FIG. 5, taken along the line VI-VI'.
FIG. 7 is a cross-sectional view of the battery module shown in FIG. 5, taken along the line VII-VII'.
FIG. 8 is a cross-sectional view of the battery module shown in FIG. 5, taken along the line VIII-VIII'.
FIG. 9 is a bottom view of a guide structure of the battery module shown in FIG. 5 and its surroundings.
FIG. 10 is a perspective view of a guide structure of the battery module shown in FIG. 5.
FIG. 11 is a front view of the guide structure shown in FIG. 11.
FIG. 12 is a side view of the guide structure shown in FIG. 10.
FIG. 13 is a cross-sectional view of a battery module according to a second embodiment.
FIG. 14 is a perspective view of a guide structure according to a third embodiment.

### DETAILED DESCRIPTION

Hereinafter, the exemplary embodiments of the present disclosure will be described in sufficient detail with reference to the accompanying drawings to enable persons having ordinary skill in the technical field pertaining to the present disclosure to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the gist of the present disclosure is omitted, and in affixing the reference numerals to the elements in each drawing, the identical or similar reference numerals are affixed to the identical or similar elements throughout the specification.

Additionally, it should be understood that the terms or words used in the specification and the appended claims should not be construed as limited to general and dictionary meanings, but rather interpreted based on the meanings and concepts corresponding to the technical aspect of the present disclosure on the basis of the principle that the inventor is allowed to define the terms appropriately for the best explanation.

It should be understood that various embodiments of the present disclosure and the terms used herein are not intended to limit the technical features of the present disclosure to particular embodiments, and include a variety of changes, equivalents or substitutes of the corresponding embodiments.

In relation to the description of the drawings, for the similar or related elements, the similar reference numerals may be used.

The singular form of a noun corresponding to an item may include one or more items unless otherwise indicated by the context.

Each of phrases such as "A or B", "at least one of A and B", "at least one of A or B", "A, B or C", "at least one of A, B and C" and "at least one of A, B or C" as used herein may include any one of the items listed together with the corresponding phrase or all possible combinations of them.

The term "and/or" includes a combination of a plurality of related stated elements or any of a plurality of related stated elements.

The terms such as "first", "second" and so on may be simply used to distinguish the corresponding element from the corresponding other embodiment, and are not intended to limit the corresponding elements in another aspect (for example, importance or order).

When an element (for example, first) is referred to as being "coupled" or "connected" to another element (for example, second) with or without the term "functionally" or "through communication", the element may be connected to the other element directly (for example, wired), wirelessly or through a third element.

The term "comprise", "include" or "have" indicates the presence of the stated features, figures, steps, operations, elements, components or a combination of them, and does not preclude the presence or addition of one or more other features, figures, steps, operations, elements, components or a combination of them.

When an element is referred to as "being connected", "being coupled to", "being supported" or "contacting" another element, this includes the cases in which the elements are directly connected, coupled, supported or contacted with each other and they are indirectly connected, coupled, supported or contacted with each other through a third element.

When an element is referred to as being "located on another element", the element can contact the other element and another element may be present between them.

Meanwhile, the terms "up-down direction", "downward", and "front-rear direction" as used herein are defined on the basis of the drawings, the shape and location of each element is not limited by these terms.

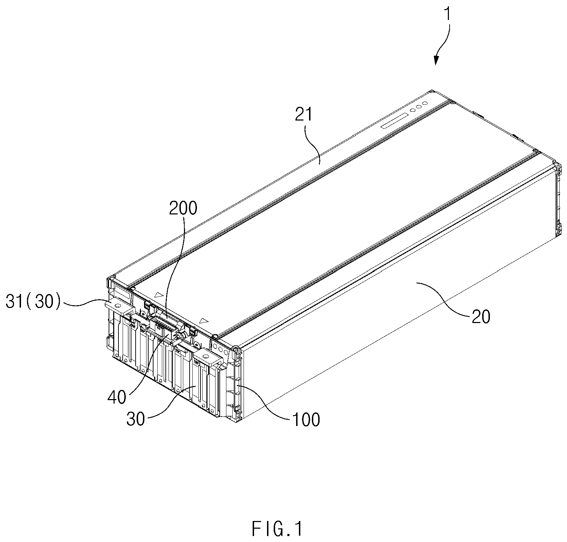

Specifically, as shown in FIG. 1, on the basis of the definition of a direction in which a busbar 30 faces as a front side and a direction in which a top plate 21 is located with respect to a module case 20 as an upper side, a rear side, a lower side, a left side and a right side may be defined.

Hereinafter, the embodiments according to the present disclosure will be described in detail with reference to the accompanying drawings.

### First embodiment

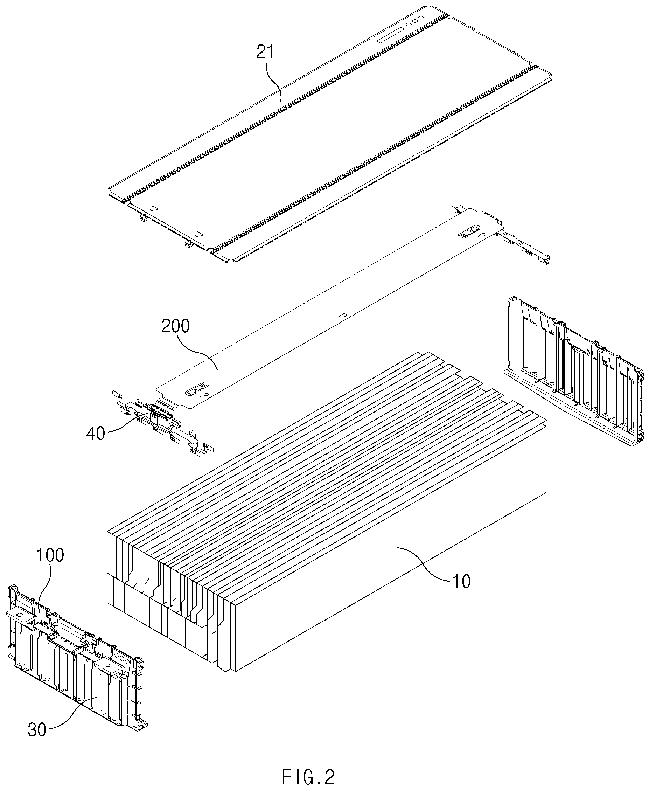

FIG. 1 is a perspective view of a battery module 1 according to a first embodiment of the present disclosure. FIG. 2 is an exploded view of the battery module 1 shown in FIG. 1 from which the module case 20 is removed.

The battery module 1 according to the first embodiment will be described with reference to FIGS. 1 and 2.

As shown in FIG. 2, a secondary battery 10 may be located in the module case 20. The module case 20 may have a space for accommodating the secondary battery 10 inside. Here, the secondary battery 10 may refer to a device that converts external electrical energy into chemical energy and stores it to produce electricity when necessary. The secondary battery 10 may include a lithium-ion battery, a lithium polymer battery, a nickel cadmium battery, a nickel hydrogen battery, a nickel zinc battery and so on. For example, the secondary battery 10 may output a voltage of about 2.5 V to 4.2 V per unit secondary battery 10. When higher output voltage is required, the battery module 1 may include a plurality of secondary batteries 10 connected to each other to output the required high voltage.

The secondary battery 10 may include an electrode assembly (not shown) formed by stacking an electrode (not shown) and a separator (not shown) in an alternating manner. First, a slurry including an electrode active material, a binder and a plasticizer may be applied to a positive current collector and a negative current collector to manufacture a positive electrode and a negative electrode. Additionally, the separators may be stacked between the electrodes to form the electrode assembly, the electrode assembly may be inserted into a battery case (not shown), an electrolyte may be injected into the battery case, and the battery case may be sealed.

Specifically, the electrode assembly may include the separator interposed between the two types of electrodes, the positive electrode and the negative electrode, to insulate the electrodes from each other. The electrode assembly may include a stack type, a jellyroll type, a stack and folding type and so on, according to the way of stacking the positive electrode, the negative electrode and the separator. The two types of electrodes, that is, the positive electrode and the negative electrode may have a structure in which the active material slurry is applied to the metal foil or mesh-type electrode current collector including aluminum and copper, respectively. The slurry may be generally formed by mixing the particulate active material, an auxiliary conductive material, the binder and the plasticizer with an addition of a solvent. The solvent may be removed from the slurry in the subsequent process.

The electrode assembly may be accommodated in the battery case. The battery case may be classified into a pouch type and a can type according to the material of the case accommodating the electrode assembly. The pouch-type battery case may be made of a flexible polymer. Although FIG. 2 shows the secondary battery 10 including the pouch-type battery case, the present disclosure is not limited thereto, and it should be understood that the aspect of the present disclosure may be also applied to the can-type battery case.

An electrode tab (not shown) may be connected to an end of the electrode assembly, and an electrode lead may be connected to the electrode tab and protruded outward from the battery case. The electrode lead may be protruded outward from the battery case. The electrode lead may include a pair of electrode leads having positive polarity and negative polarity, and the electrode lead having positive polarity and the electrode lead having negative polarity may be located at the opposite sides of the battery case. The electrode assembly and the electrode lead may be electrically connected to each other. Accordingly, electricity produced from the electrode assembly may move through the electrode lead.

The plurality of secondary batteries 10 may be stacked. The plurality of secondary batteries 10 may be stacked in the left-right direction, each standing upright in the up-down direction. The plurality of secondary batteries 10 may be stacked such that the positive electrode lead of each secondary battery 10 faces in a direction and the negative electrode lead faces in the opposite direction. By this layout, it may be possible to eliminate interference between the positive electrode lead and the negative electrode lead, thereby increasing the area of the electrode lead.

The busbar 30 may be configured to connect the plurality of electrode leads. The busbar 30 may be a rigid conductor. Preferably, the busbar 30 may include a metal material. The electrode lead may have a shape of a thin plate, which makes it difficult to align to a preset location. Accordingly, by electrically connecting the electrode lead to the busbar 30 and placing the busbar 30 toward the preset location, it may be possible to move electricity produced from the secondary battery 10 to the desired location. The electrode lead may be connected to the busbar 30 by welding. In particular, as shown in FIG. 1, when a wire is connected to a terminal busbar 31 located at each of the left side and the right side, and having a shape that is extended upwards and bent frontwards, electricity produced from the secondary battery 10 may flow through the terminal busbar 31. The terminal busbar 31 may be rigid, and accordingly, it may be easier to connect the wire to the terminal busbar 31 than to connect the wire to the electrode lead that easily deforms.

The battery module 1 may include the module case 20 that forms the space for accommodating the secondary battery 10.

The battery module 1 may include a busbar frame 100 configured to mount the busbar 30, and form the space for accommodating the secondary battery 10 together with the module case 20. The module case 20 may cover the lower side and the left and right sides of the space for accommodating the secondary battery 10, and a pair of busbar frames 100 may cover the front and rear sides of the space for accommodating the secondary battery 10. Further, the top plate 21 may be configured to cover the upper side of the space for accommodating the secondary battery 10. When the battery module 1 includes the module case 20, the pair of busbar frames 100 and the top plate 21, a space surrounded by them may be formed. The formed space may accommodate the plurality of secondary batteries 10 stacked.

The busbar frame 100 may be configured to mount the busbar 30. The busbar frame 100 may have a groove corresponding to the busbar 30, and the busbar 30 may be coupled to the groove in the busbar frame 100 by an interference fit. The busbar 30 may be located at the front side of the busbar frame 100 located at the front side. The busbar frame 100 may support the busbar 30.

The busbar frame 100 may have a hole through which the electrode lead of the secondary battery 10 passes. The busbar 30 may have a hole corresponding to the hole in the busbar frame 100. After aligning the hole in the busbar frame 100 and the hole in the busbar 30 and placing the electrode lead such that the electrode lead passes through the hole in the busbar frame 100 and the hole in the busbar 30, the electrode lead protruded further frontwards than the busbar 30 may be bent and placed in contact with the busbar 30. When the electrode lead contacts the busbar 30, the area of contact between the electrode lead and the busbar 30 may be welded to immobilize the connection of the electrode lead and the busbar 30.

To sum, electricity produced from the electrode assembly may be transferred to the busbar 30 via the electrode tab and the electrode lead.

It may be necessary to measure and manage the voltage generated by the battery module 1. The voltage generated by the battery module 1 may be changed by external impacts or internal factors, and as a consequence, an accident such as explosion may occur in the battery module 1. A Battery Management System (BMS) may be used to receive a signal associated with voltage, and control the battery module 1. The BMS may be connected to a substrate 200 included in the battery module 1 to receive the signal from the battery module 1. The substrate 200 may be electrically connected to the busbar 30 to receive the signal associated with voltage. When a wire extended from the BMS is connected to a connector pin 41 shown in FIG. 2, the BMS may be connected to the substrate 200.

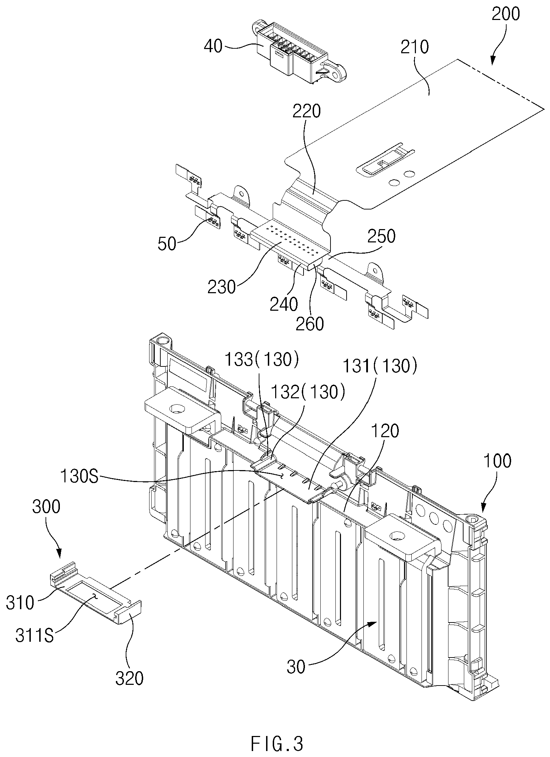

As shown in FIG. 2, the substrate 200 may include a substrate body 210 (FIG. 3) extended along the length direction of the secondary battery 10 between the top plate 21 and the secondary battery 10. A part of the substrate 200 extended from the substrate body 210 may be connected to the busbar 30 disposed at the front side, and to this end, the substrate 200 may be bent. The substrate 200 may include a flexible material to allow it to easily bend. That is, the substrate 200 may be a Flexible Printed Circuit Board (FPCB).

The part of the substrate 200 may be supported by the busbar frame 100. Hereinafter, the substrate 200 and the busbar frame 100 will be described in detail.

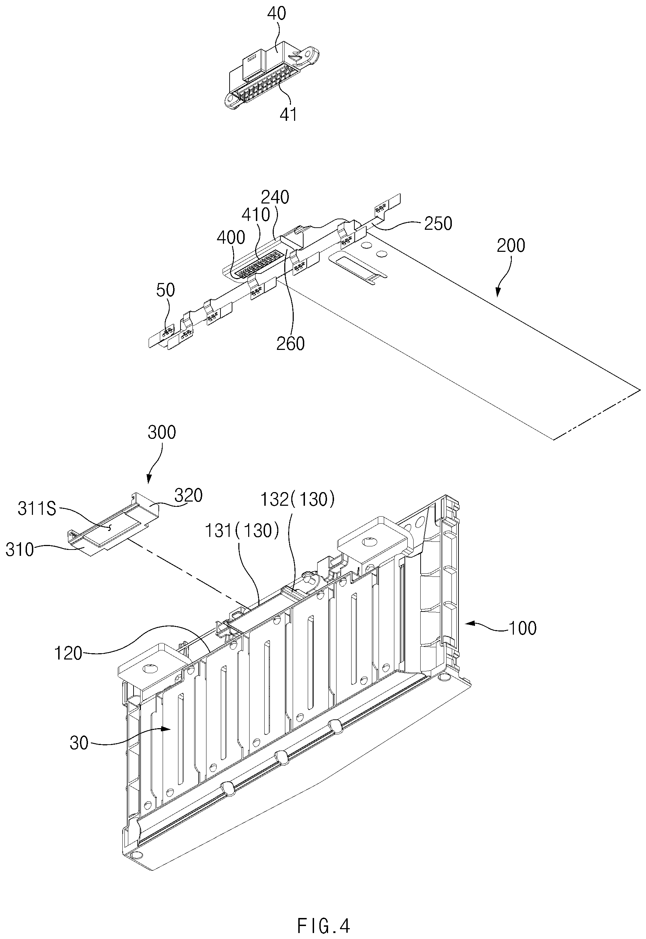

FIG. 3 is an enlarged exploded view of the components adjacent to the busbar 30 in the battery module 1 shown in FIG. 2. FIG. 4 is an enlarged exploded view of the battery module 1 shown in FIG. 3 when viewed from a different angle.

The substrate 200 and the busbar frame 100 according to the first embodiment will be described in detail with reference to FIGS. 3 and 4. The following description is made based on the busbar frame 100 located at the front side and the components adjacent to the busbar frame 100. The component located at the rear side may be understood as having a symmetrical relationship with the component located at the front side.

As shown in FIG. 3, the substrate 200 may include a bent portion 220 extended from the substrate body 210. The bent portion 220 may be bent from the end portion of the substrate body 210 and extended in a direction toward the busbar 30. For example, the bent portion 220 may be extended downwards. The bent portion 220 may be supported by the busbar frame 100.

The substrate 200 may include a connection pin insertion portion 230 bent from the bent portion 220 and extended frontwards. The connection pin insertion portion 230 may be supported by a space forming rib 130 as described below, and the space forming rib 130 may be extended frontwards, and thus the connection pin insertion portion 130 may be extended frontwards along the space forming rib 130. The connection pin insertion portion 230 may be formed corresponding to the connector pin 41 of a connector 40. The connection pin insertion portion 230 may have a hole corresponding to the connector pin 41. The connector pin 41 may be inserted into the hole of the connection pin insertion portion 230 and electrically connected to the connection pin insertion portion 230.

The substrate 200 may include a connection bending portion 240 bent and extended downward from the connection pin insertion portion 230 and/or a second substrate extension portion 260 bent and extended rearward from the connection bending portion 240. The connection bending portion 240 may connect the connection pin insertion portion 230 to the second substrate extension portion 260. A space may be formed between the connection pin insertion portion 230 and the second substrate extension portion 260, and a part of the connector pin 41 passing through the connection pin insertion portion 230 may be located in the space.

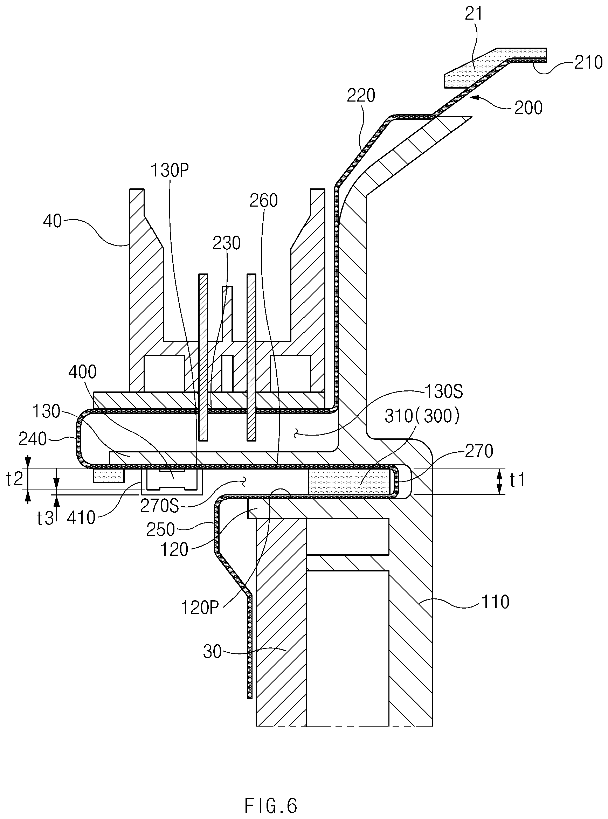

The substrate 200 may include a first substrate extension portion 250 connected to the second substrate extension portion 260 by a substrate bending portion 270 (see FIG. 6) as described below.

The substrate 200 may include a sensing terminal 50 extended from the first substrate extension portion 250 and connected to the busbar 30. The sensing terminal 50 may include a plurality of sensing terminals, each corresponding to each of a plurality of busbars 30. The substrate 200 may be connected to the busbar 30 by the sensing terminal 50, and to put it another way, the first substrate extension portion 250 may be connected to the busbar 30 by the sensing terminal 50. That is, the first substrate extension portion 250 may be connected to the busbar 30.

In particular, as shown in FIG. 4, a fuse 400 may be mounted on the second substrate extension portion 260. However, the way of coupling the fuse 400 to the second substrate extension portion 260 is not limited to mounting. For example, the fuse 400 may be printed on the second substrate extension portion 260. Accordingly, to be exact, the fuse 400 may be located at the second substrate extension portion 260.

When the electric current exceeds a predetermined value, the fuse 400 may stop the flow of electric current in the substrate 200. The fuse 400 may be protruded from the second substrate extension portion 260 toward the first substrate extension portion 250. More specifically, the fuse 400 may be protruded downwards. However, when the fuse 400 is formed on the second substrate extension portion 260 by printing, to put it simply, the fuse 260 may face the second substrate extension portion 260.

A fuse coating 410 may be configured to cover the fuse 400. The fuse coating 410 may be configured to protect the fuse 400.

The busbar frame 100 may be configured to support the substrate 200. The busbar frame 100 may include a frame body 110. The frame body 110 may face the secondary battery 10 (see FIG. 2).

The busbar frame 100 may include the space forming rib 130 configured to support the connection pin insertion portion 230 of the substrate 200. The space forming rib 130 may be configured to support the connection pin insertion portion 230 below the connection pin insertion portion 230. The space forming rib may have an end portion 132 extended upward from a base portion 131 of the space forming rib. The end portion 132 of the space forming rib may be connected to the frame body 110, and to enhance the connection between the end portion 132 of the space forming rib and the frame body 110, the space forming rib may include a protruding portion 133 connecting the end portion 132 of the space forming rib to the frame body 110. The protruding portion 133 of the space forming rib may be protruded upward from the end portion 132 of the space forming rib. Further, a connector pin accommodation space 130S may be formed in a shape that is concave downwards by the base portion 131 of the space forming rib and the end portion 132 of the space forming rib.

The connection pin insertion portion 230, the connection bending portion 240 and the second substrate extension portion 260 of the substrate 200 may surround the space forming rib 130. Accordingly, the connector pin accommodation space 130S may be where the connection pin insertion portion 230 may be located at the upper side, the connection bending portion 240 may be located at the front side, and the space forming rib 130 may be located at the lower side. The end portion of the connector pin 41 may penetrate the connector pin accommodation space 130S and be located in the connector pin accommodation space 130S.

The busbar frame 100 may include a support rib 120 to support the busbar 30. The support rib 120 may be located on the busbar 30. The busbar 30 may be supported by the support rib 120 from above, and supported by other part of the frame body 110 protruded frontward from the frame body 110 from underneath, thereby preventing the busbar 30 from moving in the up-down direction. The busbar 30 may be mounted on the busbar frame 100 by the support rib 120. Further, the support rib 120 may support the first substrate extension portion 250 from underneath.

The battery module 1 may include a guide structure 300 including a barrier portion 310 located between the first substrate extension portion 250 and the second substrate extension portion 260. The guide structure 300 may include a pair of cover sidewalls 320 extended upward from the left and right ends of the barrier portion 310. The guide structure 300 may have a fuse accommodation hole 311S for accommodating the fuse 400.

The guide structure 300 will be described in further detail.

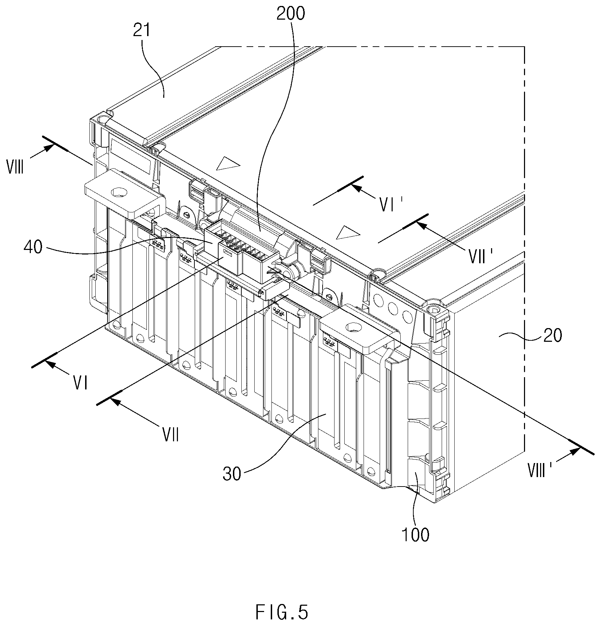

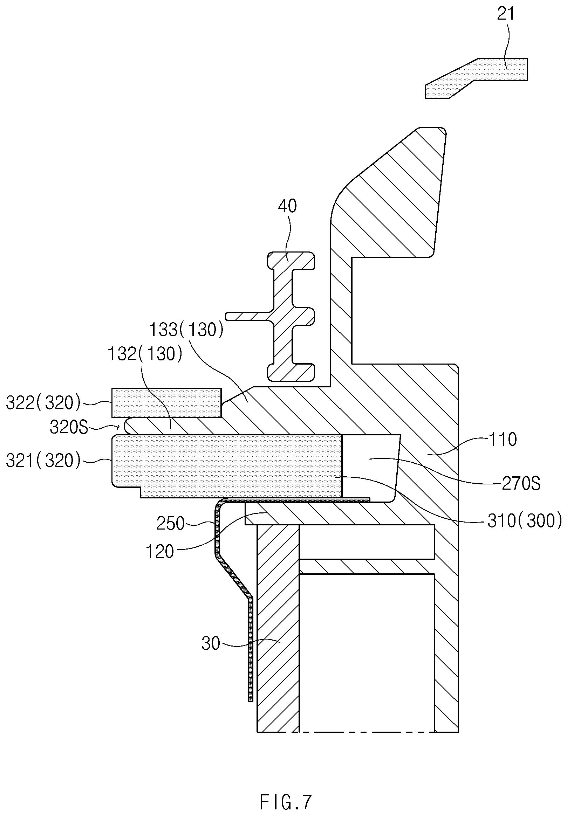

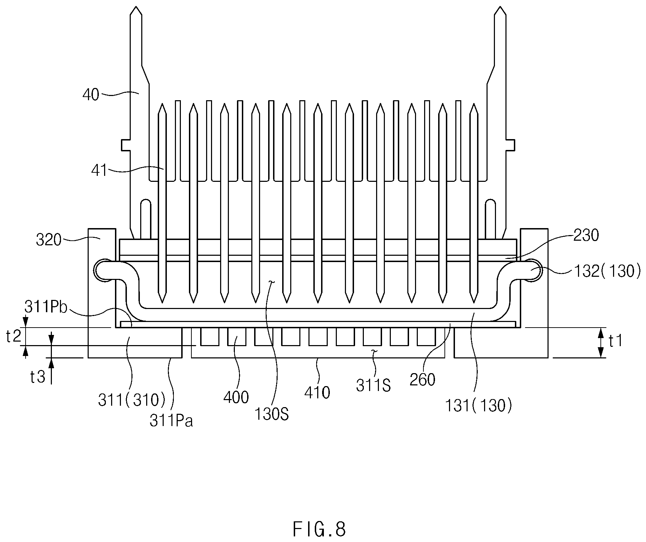

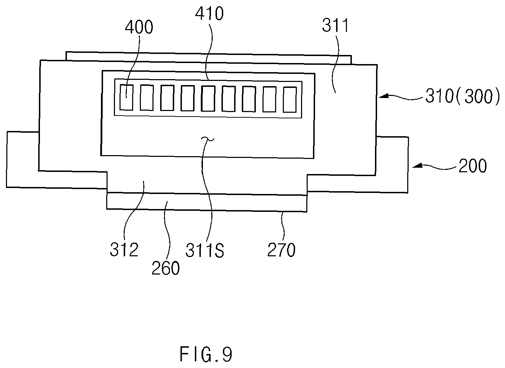

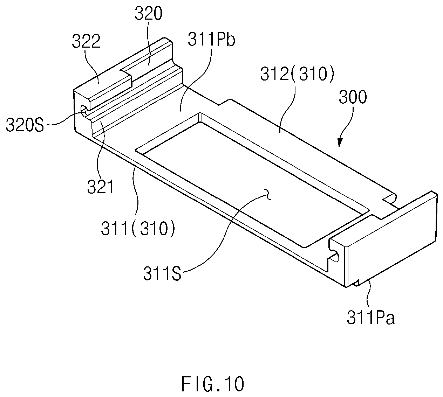

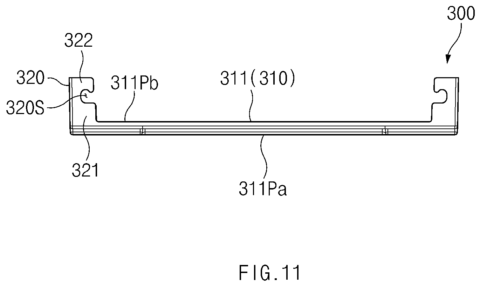

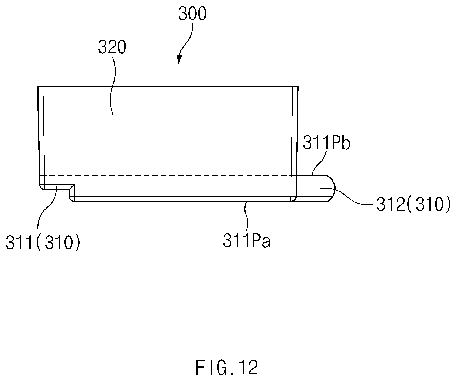

FIG. 5 is an enlarged perspective view of the battery module 1 shown in FIG. 1. FIG. 6 is a cross-sectional view of the battery module 1 shown in FIG. 5, taken along the line VI-VI'. FIG. 7 is a cross-sectional view of the battery module 1 shown in FIG. 5, taken along the line VII-VII'. FIG. 8 is a cross-sectional view of the battery module 1 shown in FIG. 5, taken along the line VIII-VIII'. FIG. 9 is a bottom view of the guide structure 300 of the battery module 1 shown in FIG. 5 and its surroundings. FIG. 10 is a perspective view of the guide structure 300 of the battery module 1 shown in FIG. 5. FIG. 11 is a front view of the guide structure 300 shown in FIG. 11. FIG. 12 is a side view of the guide structure 300 shown in FIG. 10.

The guide structure 300 according to the first embodiment and its surroundings will be described with reference to FIGS. 5 to 9. Further, the structure of the guide structure 300 will be described in detail with reference to FIGS. 10 to 12.

As shown in FIG. 6, the barrier portion 310 of the guide structure 300 may be located between the first substrate extension portion 250 and the second substrate extension portion 260. The second substrate extension portion 260 may be moved closer to the first substrate extension portion 250 by the gravity. In case the barrier portion 310 is absent, the second substrate extension portion 260 may move toward the first substrate extension portion 250 and come into contact with the first substrate extension portion 250. When the first substrate extension portion 250 contacts the second substrate extension portion 260, layers on the surface of the first substrate extension portion 250 and the second substrate extension portion 260 may break, causing the substrate 200 to malfunction.

Further, the fuse 400 mounted on the second substrate extension portion 260 may fail by the contact with the first substrate extension portion 250. The fuse 400 may interrupt the flow of electric current in the event of over current, but in case the fuse 400 fails, a temperature rise caused by the over current flow in the substrate 200 may not be prevented. To prevent the fuse 400 failure, the fuse coating 410 may be used to cover the fuse 400, but cracks may occur in the fuse coating 410 by the contact with the second substrate extension portion 260 and there may be still a risk that the fuse 400 will fail.

When the fuse coating 410 is used to cover the fuse 400 in order to prevent the fuse 400 failure, due to the brittleness of the fuse coating 410, deformation of the second substrate extension portion 260 that contacts the fuse coating 410 becomes difficult, and accordingly, the second substrate extension portion 260 that contacts the fuse coating 410 needs to be extended in a straight line across a predetermined length. When the second substrate extension portion 260 is extended frontwards, the volume occupied by the battery module 1 may generally increase, and thus the second substrate extension portion 260 may be preferably extended rearwards. When the second substrate extension portion 260 is extended rearwards as much as necessary, the end portion of the second substrate extension portion 260 may not be located immediately above the busbar 30. Accordingly, to connect the end portion of the second substrate extension portion 260 to the busbar 30, the substrate bending portion 270 and the first substrate extension portion 250 may be used. The end portion of the second substrate extension portion 260 may be located at the upper rear side with respect to the busbar 30. With the substrate bending portion 270 extended downward from the end portion of the second substrate extension portion 260 and the first substrate extension portion 250 extended frontward from the substrate bending portion 270, the second substrate extension portion 260 may be connected to the busbar 30.

In this instance, the fuse 400 may be preferably located on the second substrate extension portion 260. The fuse 400 may be located between the connector pin 41 and the busbar 30. It is because that the fuse 400 needs to shut off the electric current flowing between the BMS and the busbar 30. In the case where the fuse 400 is mounted on the connection pin insertion portion 230, because the connection pin insertion portion 230 needs to be extended further frontwards, the battery module 1 is extended frontwards, and unfavorably, the volume occupied by the battery module 1 increases. In the case where the fuse 400 is located on the connection bending portion 240, the fuse 400 is protruded frontwards, and for the same reason, it may be disadvantageous. The connector pin 41 may be thicker than the busbar 30, and accordingly the space forming rib 130 configured to support the connector pin 41 may be protruded further frontwards than the support rib 120 configured to support the busbar 30. That is, the support rib 120 may be located at the lower rear side of the space forming rib 130, but the support rib 120 may not be located at the lower front side of the space forming rib 130. Accordingly, the fuse 400 may be located in a space in which the support rib 120 formed at the lower front side of the space forming rib 130 is not located. This may signify that the fuse 400 is mounted at the front part of the second substrate extension portion 260. Accordingly, the mounting of the fuse 400 may not substantially increase the volume occupied by the battery module 1.

However, as described above, when the fuse 400 is disposed at the desirable location, the fuse 400 may be located adjacent to the first substrate extension portion 250, so the fuse 400 and/or the fuse coating 410 may come into contact with the first substrate extension portion 250 by external forces. In this case, impacts may be applied to the fuse 400, causing damage to the fuse 400. To prevent this, the guide structure 300 may be used.

The substrate 200 may include the first substrate extension portion 250 connected to the busbar 30 and supported by the busbar frame 100, the substrate bending portion 270 bent from the end portion of the first substrate extension portion 250, and the second substrate extension portion 260 extended from the substrate bending portion 270. The substrate 200 may form an internal space 270S surrounded by the first substrate extension portion 250, the substrate bending portion 270 and the second substrate extension portion 260. The guide structure 300 may include the barrier portion 310 located in the internal space 270S to prevent the contact between the fuse 400 and the first substrate extension portion 250. The fuse 400 may be mounted on the second substrate extension portion 260, and protruded toward the internal space 270S. In other words, the fuse 400 may be located at the second substrate extension portion 260, and face the internal space 270S. That is, the barrier portion 310 may be located between the first substrate extension portion 250 and the second substrate extension portion 260.

The support rib 120 may have a first rib surface 120P facing the first substrate extension portion 250. The space forming rib 130 may have a second rib surface 130P facing the second substrate extension portion 260. The first substrate extension portion 250 may be adjacent to the support rib 120, while facing the first rib surface 120P. The second substrate extension portion 260 may be adjacent to the space forming rib 130, while facing the second rib surface 130P.

The first substrate extension portion 250 may be located adjacent to the support rib 120, and the second substrate extension portion 260 may be located adjacent to the space forming rib 130, so it may be said that the internal space 270S is formed by the support rib 120 and/or the space forming rib 130. Accordingly, the barrier portion 310 may be located between the support rib 120 and the space forming rib 130.

More specifically, the barrier portion 310 may include a base 311 (see FIG. 10) having a first support surface 311Pa supported by the first substrate extension portion 250. The base 311 may contact the first substrate extension portion 250. The first substrate extension portion 250 may be supported by the support rib 120, so the base 311 may be indirectly supported by the support rib 120. That is, the first support surface 311Pa may be configured such that the first substrate extension portion 250 is located between the first support surface 311Pa and the support rib 120.

The base 311 may be configured to support the second substrate extension portion 260. More specifically, the base 311 may have a second support surface 311Pb located on the opposite side to the first support surface 311Pa, and supporting the second substrate extension portion 260. The second support surface 311Pb may support the second substrate extension portion 260 from underneath, thereby preventing the second substrate extension portion 260 from moving downwards. In particular, the second substrate extension portion 260 may be located adjacent to the space forming rib 130, so the second support surface 311Pb may be configured such that the second substrate extension portion 260 is located between the second support surface 311Pb and the space forming rib 130.

The support rib 120 and the space forming rib 130 may be extended parallel to each other. Accordingly, the first substrate extension portion 250 adjacent to the support rib 120 and the second substrate extension portion 260 adjacent to the space forming rib 130 may be extended parallel to each other. The base 311 may be extended parallel to the first substrate extension portion 250 and the second substrate extension portion 260. As shown in FIG. 10, the base 311 may have a plate shape having a predetermined thickness. The base 311 may have the thickness corresponding to a distance between the first substrate extension portion 250 and the second substrate extension portion 260 so that the base 311 may be located between the space forming rib 130 and the support rib 120. Accordingly, the base 311 may prevent the second substrate extension portion 260 from moving in the gravity direction from the distance apart from the first substrate extension portion 250 in the beginning.

In particular, as shown in FIG. 12, the first support surface 311Pa may be extended further than the second support surface 311Pb in a direction facing away from the frame body 110. As shown in FIG. 6, because the second rib surface 130P is extended further from the frame body 110 than the first rib surface 120P, the second substrate extension portion 260 extended along the second rib surface 130P may be extended further from the frame body 110 than the first substrate extension portion 250 extended along the first rib surface 120P, and accordingly, the second support surface 311Pb supporting the second substrate extension portion 260 may be extended further from the frame body 110 than the first support surface 311Pa supported by the first substrate extension portion 250.

As shown in FIG. 10, the barrier portion 310 may include a protruding rib 312 extended from the base 311. As shown in FIG. 6, the protruding rib 312 may be protruded toward the substrate bending portion 270. The protruding rib 312 may be adjacent to the substrate bending portion 270. The substrate bending portion 270 may be smaller in width than the second substrate extension portion 260 and/or the first substrate extension portion 250. Accordingly, the protruding rib 312 may have a width corresponding to the substrate bending portion 270, and the protruding rib 312 may have a smaller width than the base 311. While placing the substrate 200 between the space forming rib 130 and the support rib 120, the substrate 200 may be subjected to pressure by the protruding rib 312, and the substrate 200, parts of which are folded, may be located between the space forming rib 130 and the support rib 120, to form the first substrate extension portion 250, the second substrate extension portion 260 and the substrate bending portion 270. In this process, in case the width of the protruding rib 312 is smaller than the width of the substrate bending portion 270, the pressure applied to the substrate bending portion 270 may become stronger. To prevent this, the width of the protruding rib 312 may be equal to or larger than the width of the substrate bending portion 270. However, preferably, the protruding rib 312 may be formed with the width corresponding to the width of the substrate bending portion 270 to minimize material wastage and reduce damage to the substrate bending portion 270.

As shown in FIGS. 9 and 10, the base 311 may have the fuse accommodation hole 311S for accommodating the fuse 400. The fuse accommodation hole 311S may be sized to accommodate the fuse 400 of various sizes. The fuse 400 may be protruded from the second substrate extension portion 260, and accordingly, when the fuse 400 is accommodated in the fuse accommodation hole 311S, the second substrate extension portion 260 located near the fuse 400 may be located in contact with the second support surface 311Pb of the base 311.

The fuse coating 410 may be used to cover the fuse 400. As mentioned above, when the fuse coating 410 covers the fuse 400, it may be possible to prevent damage to the fuse 400. However, when the fuse coating 410 is overly thick, the fuse coating 410 is protruded toward the first substrate extension portion 250 and comes into contact with the first substrate extension portion 250, and there is a high likelihood that cracks will occur in the fuse coating 410. To prevent this, and keep the thickness t3 of the fuse coating 410 constant, the fuse coating 410 located over the fuse accommodation hole 311S may be removed. Alternatively, while forming the fuse coating 410, the fuse coating 410 protruded over the fuse accommodation hole 311S may be removed to prevent the fuse coating 410 from exceeding the predetermined thickness t3. The thickness t1 of the fuse accommodation hole 311S may correspond to the thickness of the base 311. Because the thickness of the base 311 may correspond to the distance between the first substrate extension portion 250 and the second substrate extension portion 260, the thickness of the fuse accommodation hole 311S may correspond to the distance between the first substrate extension portion 250 and the second substrate extension portion 260. For example, when the thickness t2 of the fuse 400 is 1 mm, the thickness t1 of the fuse accommodation hole 311S may be 1.5 mm to make the thickness t3 of the fuse coating 410 equal to or smaller than 0.5 mm. That is, the fuse accommodation hole 311S may have the thickness that is equal to or larger than the sum of the thickness of the fuse 400 and the thickness of the fuse coating 410.

As shown in FIG. 10, the guide structure 300 may include the cover sidewall 320 extended upward from the base 311. The cover sidewall 320 may be extended from the barrier portion 310 in a direction facing away from the support rib 120 to cover the side of the space forming rib 130. The cover sidewall 320 may be extended from the left end portion and/or the right end portion of the base 311.

As shown in FIGS. 7 and 10, the cover sidewall 320 may have a mount slit 320S extended in the extension direction of the end portion 132 of the space forming rib to accommodate the end portion 132 of the space forming rib. The end portion 132 of the space forming rib may be accommodated in the mount slit 320S. Accordingly, while the barrier portion 310 deforms a part of the substrate 200 to form the first substrate extension portion 250 and the second substrate extension portion 260, the barrier portion 310 may be guided to make parallel movement to the extension direction of the support rib 120 and the space forming rib 130. That is, when the end portion 132 of the space forming rib is accommodated in the mount slit 320S, the movement of the barrier portion 310 in the extension direction of the internal space 270S may be guided.

As shown in FIG. 11, the cover sidewall 320 may include a step portion 321 protruded from the base 311 to support the end portion 132 of the space forming rib, and the cover sidewall 320 may include a slit forming flange 322 spaced apart from the step portion 321 to form the mount slit 320S between the slit forming flange 322 and the step portion 321 and extended parallel to the extension direction of the mount slit 320S. The end portion 132 of the space forming rib may be located at a higher position than the base portion 131 of the space forming rib. Because the base 311 may indirectly support the base portion 131 of the space forming rib, and the end portion 132 of the space forming rib is spaced apart higher than the base portion 131 of the space forming rib, the step portion 321 extended from the base 311 to the end portion 132 of the space forming rib may be used to support the end portion 132 of the space forming rib. The end portion 132 of the space forming rib may be located on the step portion 321, and accordingly, to form the mount slit 320S at which the end portion 132 of the space forming rib will be located, the slit forming flange 322 may be disposed on the mount slit 320S.

In this instance, the step portion 321 may be extended toward the frame body 110, and the slit forming flange 322 may be extended toward the frame body 110 less than the step portion 321. As shown in FIGS. 7 and 8, the protruding portion 133 of the space forming rib extended upwards may be located at the rear of the end portion 132 of the space forming rib, and accordingly, the slit forming flange 322 may not be extended over the space forming rib 130. The mount slit 320S may not be formed at the upper side of the step portion 321 where there is no slit forming flange 322 at the upper side. The guide structure 300 may have a wider opening at the side having no slit forming flange 322 than at the side having the slit forming flange 322, and accordingly, the space forming rib 130 may first go into the wider opening, making it easier for the barrier portion 310 of the guide structure 300 to move into the internal space 270S of the busbar frame 100.

Hereinafter, different embodiment(s) from the first embodiment will be described. The common description to the first embodiment and the other embodiment(s) is omitted and the other embodiment(s) will be described based on difference(s). That is, it is obvious that when a certain description not mentioned in second and third embodiments is necessary, the description of the first embodiment may make up for the description.

### Second embodiment

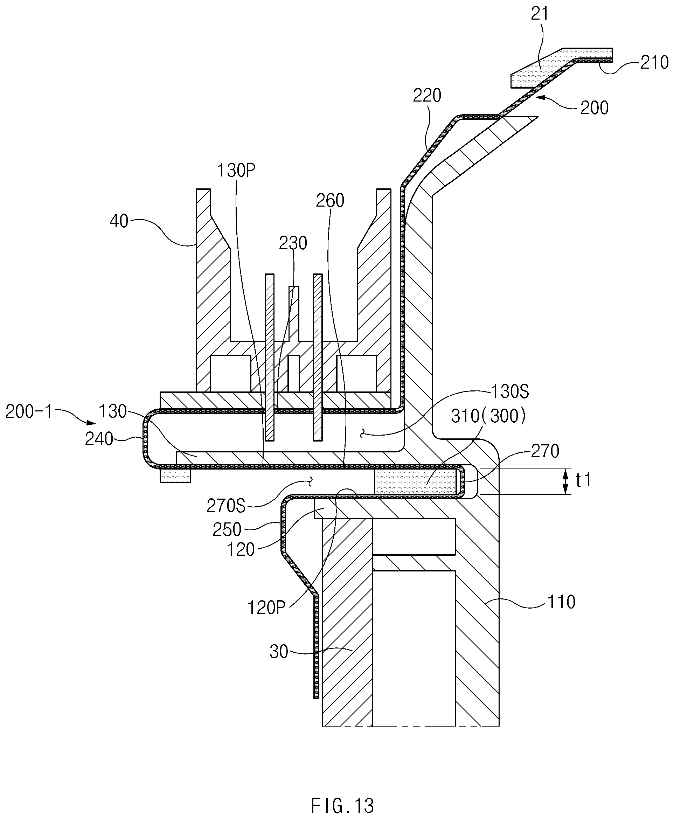

FIG. 13 is a cross-sectional view of the battery module 1 according to the second embodiment.

The battery module 1 according to the second embodiment will be described with reference to FIG. 13.

The battery module 1 according to the second embodiment is different from the battery module 1 according to the first embodiment in that the fuse 400 is not mounted on the second substrate extension portion 260 of the substrate 200-1.

The aspect of the present disclosure may be directed to not only preventing cracks in the fuse 400 due to the contact between the fuse 400 and the substrate 200-1 but also preventing damage to the substrate 200-1 due to the contact between the adjacent substrates 200-1, so the battery module 1 of the second embodiment may be also seen as an embodiment to which the aspect of the present disclosure is applied.

### Third embodiment

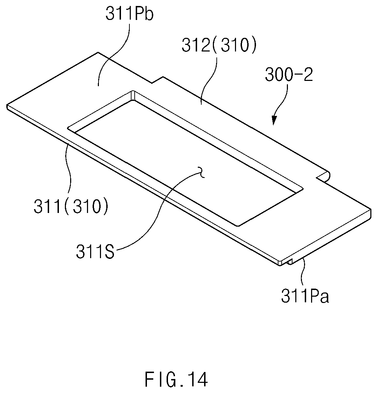

FIG. 14 is a perspective view of the guide structure 300-2 according to the third embodiment.

The guide structure 300-2 according to the third embodiment will be described with reference to FIG. 14.

The guide structure 300-2 according to the third embodiment does not have the cover sidewall 320 as opposed to the guide structure 300 according to the first embodiment.

As described in the first embodiment, the cover sidewall 320 may protect the space forming rib 130, and guide the movement of the guide structure 300 to the preset location. However, even though the cover sidewall 320 is absent, the guide structure 300-1 may be moved to the preset location.

When the guide structure 300-2 is moved to the preset location, because the guide structure 300-2 includes the barrier portion 310, it may be possible to prevent the contact between the fuse 400, the fuse coating 410 and/or the second substrate extension portion 260 and the first substrate extension portion 250.

Accordingly, the guide structure 300-2 of the shape shown in FIG. 14 may also achieve the objective of the present disclosure.

The battery module 1 according to an embodiment of the present disclosure may include the following aspect.

The battery module 1 according to an embodiment of the present disclosure may include the busbar 30, the busbar frame 100 on which the busbar 30 is mounted, the substrate 200 including the first substrate extension portion 250 connected to the busbar 30 and supported by the busbar frame 100, the substrate bending portion 270 bent from the end portion of the first substrate extension portion 250, and the second substrate extension portion 260 extended from the substrate bending portion 270, wherein the substrate 200 forms the internal space 270S surrounded by the first substrate extension portion 250, the substrate bending portion 270 and the second substrate extension portion 260, the fuse 400 mounted on the second substrate extension portion 260 and protruded toward the internal space 270S, and the guide structure 300 including the barrier portion 310 located in the internal space 270S to prevent the contact between the fuse 400 and the first substrate extension portion 250.

The guide structure 300 may further include the base 311 having the first support surface 311Pa supported by the first substrate extension portion 250.

The busbar frame 100 may include the frame body 110 and the support rib 120 extended from the frame body 110 to support the first substrate extension portion 250, and the first support surface 311Pa may be configured such that the first substrate extension portion 250 is located between the first support surface 311Pa and the support rib 120.

The base 311 may further have the second support surface 311Pb located on the opposite side to the first support surface 311Pa, and supporting the second substrate extension portion 260.

The busbar frame 100 may further include the space forming rib 130 spaced apart from the support rib 120 to define the internal space 270S between the space forming rib 130 and the support rib 120, the space forming rib 130 being adjacent to the second substrate extension portion 260, and the second support surface 311Pb may be configured such that the second substrate extension portion 260 is located between the second support surface 311Pb and the space forming rib 130.

The base 311 may have the thickness corresponding to the distance between the first substrate extension portion 250 and the second substrate extension portion 260 so that the base 311 may be located between the space forming rib 130 and the support rib 120.

The support rib 120 may have the first rib surface 120P facing the first substrate extension portion 250, and the space forming rib 130 may have the second rib surface 130P facing the second substrate extension portion 260 and extended further than the first rib surface 120P in the direction facing away from the frame body 110. The first support surface 311Pa may be extended further than the second support surface 311Pb in the direction facing away from the frame body 110.

The barrier portion 310 may include the protruding rib 312 protruded from the base 311 toward the substrate bending portion 270.

The protruding rib 312 may have a smaller width than the base 311 to have the width corresponding to the substrate bending portion 270.

The guide structure 300 may further include the cover sidewall 320 extended from the barrier portion 310 in the direction facing away from the support rib 120 to cover the side of the space forming rib 130.

The cover sidewall 320 may have the mount slit 320S extended in the extension direction of the end portion 132 of the space forming rib to accommodate the end portion 132 of the space forming rib.

The cover sidewall 320 may include the step portion 321 protruded from the base 311 to support the end portion 132 of the space forming rib, and the slit forming flange 322 spaced apart from the step portion 321 to form the mount slit 320S between the slit forming flange 322 and the step portion 321 and extended parallel to the extension direction of the mount slit 320S.

The step portion 321 may be extended toward the frame body 110, and the slit forming flange 322 may be extended toward the frame body 110 less than the step portion 321.

The base 311 may have the fuse accommodation hole 311S for accommodating the fuse 400.

The battery module 1 may further include the fuse coating 410 configured to cover the fuse 400, and the fuse accommodation hole 311S may have the thickness that is equal to or larger than the sum of the thickness of the fuse 400 and the thickness of the fuse coating 410.

The battery module 1 according to an embodiment of the present disclosure may include the busbar frame 100 on which the busbar 30 is mounted, the busbar frame 100 including the frame body 110 and the support rib 120 extended from the frame body 110, the substrate 200 including the first substrate extension portion 250 supported by the support rib 120, the second substrate extension portion 260 extended parallel to the first substrate extension portion 250 and located above the first substrate extension portion 250 and the substrate bending portion 270 connecting the first substrate extension portion 250 to the second substrate extension portion 260, and the guide structure 300 including the barrier portion 310 located between the first substrate extension portion 250 and the second substrate extension portion 260 to prevent the contact between the second substrate extension portion 260 and the first substrate extension portion 250.

The guide structure 300 may further include the base 311 having the first support surface 311Pa supported by the first substrate extension portion 250.

The base 311 may have the second support surface 311Pb located on the opposite side to the first support surface 311Pa, and supporting the second substrate extension portion 260.

The busbar frame 100 may further include the space forming rib 130 spaced apart from the support rib 120 to define the internal space 270S between the space forming rib 130 and the support rib 120, the space forming rib 130 being adjacent to the second substrate extension portion 260, and the second support surface 311Pb may be configured such that the second substrate extension portion 260 is located between the second support surface 311Pb and the space forming rib 130.

The battery module 1 according to an embodiment of the present disclosure may include the plurality of secondary batteries 10, the busbar 30 electrically connected to the plurality of secondary batteries 10, the busbar frame 100 configured to mount the busbar 30, and including the frame body 110, the support rib 120 extended frontward from the frame body 110 to support the busbar 30 from above and the space forming rib 130 extended frontward from the frame body 110 to form the space between the space forming rib 130 and the support rib 120, the substrate 200 including the first substrate extension portion 250 electrically connected to the busbar 30 and supported by the support rib 120 and the second substrate extension portion 260 adjacent to the space forming rib 130 and facing the first substrate extension portion 250, the fuse 400 mounted on the second substrate extension portion 260, and protruded toward the first substrate extension portion 250, and the guide structure 300 including the barrier portion 310 located between the first substrate extension portion 250 and the second substrate extension portion 260 to prevent the contact between the fuse 400 and the first substrate extension portion 250.

Unless mentioned otherwise, the disclosed embodiments may be combined with other embodiments. Alternatively, in combining an embodiment with other embodiment, unless otherwise specified, any combination of embodiments may be made without limitation. It should be understood that such a combination of embodiments is disclosed in the present disclosure.

Although the present disclosure has been hereinabove described with regard to a limited number of embodiments and drawings, the present disclosure is not limited thereto, and the present disclosure may be embodied in different forms by persons having ordinary skill in the technical field pertaining to the present disclosure within the technical aspect of the present disclosure and the appended claims and their equivalent scope.

### [List of Reference Numerals]

1: Battery module
10: Secondary battery
30: Busbar
40: Connector
100: Busbar frame
110: Frame body
120: Support rib
120P: First rib surface
130: Space forming rib
130P: Second rib surface
132: End portion of space forming rib
200: Substrate
210: Substrate body
240: Connection bending portion
250: First substrate extension portion
260: Second substrate extension portion
270: Substrate bending portion
270S: Internal space
300: Guide structure
310: Barrier portion
311: Base
311Pa: First support surface
311Pb: Second support surface
311S: Fuse accommodation hole
312: Protruding rib
320: Cover sidewall
320S: Mount slit
321: Step portion
322: Slit forming flange
400: Fuse
410: Fuse coating

## Claims

1. A battery module comprising:
a busbar;
a busbar frame on which the busbar is mounted;
a substrate including a first substrate extension portion connected to the busbar and supported by the busbar frame, a substrate bending portion bent from an end portion of the first substrate extension portion, and a second substrate extension portion extended from the substrate bending portion, wherein the substrate forms an internal space surrounded by the first substrate extension portion, the substrate bending portion and the second substrate extension portion;
a fuse located at the second substrate extension portion, and facing the internal space; and
a guide structure including a barrier portion located in the internal space to prevent contact between the fuse and the first substrate extension portion.

2. The battery module according to claim 1,
wherein the guide structure further includes a base having a first support surface supported by the first substrate extension portion.

3. The battery module according to claim 2,
wherein the busbar frame includes a frame body and a support rib extended from the frame body to support the first substrate extension portion, and
wherein the first support surface is configured such that the first substrate extension portion is located between the first support surface and the support rib.

4. The battery module according to claim 3,
wherein the base further has a second support surface located on an opposite side to the first support surface, and configured to support the second substrate extension portion.

5. The battery module according to claim 4,
wherein the busbar frame further includes a space forming rib spaced apart from the support rib to define the internal space between the space forming rib and the support rib, the space forming rib being adjacent to the second substrate extension portion, and
wherein the second support surface is configured such that the second substrate extension portion is located between the second support surface and the space forming rib.

6. The battery module according to claim 5,
wherein the base has a thickness corresponding to a distance between the first substrate extension portion and the second substrate extension portion so that the base is located between the space forming rib and the support rib.

7. The battery module according to claim 5,
wherein the support rib has a first rib surface facing the first substrate extension portion,
wherein the space forming rib has a second rib surface facing the second substrate extension portion, and extended further than the first rib surface in a direction facing away from the frame body, and
wherein the first support surface is extended further than the second support surface in the direction facing away from the frame body.

8. The battery module according to claim 2,
wherein the barrier portion includes a protruding rib protruded from the base toward the substrate bending portion.

9. The battery module according to claim 8,
wherein the protruding rib has a smaller width than the base to have a width correspond to the substrate bending portion.

10. The battery module according to claim 5,
wherein the guide structure further includes a cover sidewall extended from the barrier portion in a direction facing away from the support rib to cover a side of the space forming rib.

11. The battery module according to claim 10,
wherein the cover sidewall has a mount slit extended in an extension direction of an end portion of the space forming rib to accommodate the end portion of the space forming rib.

12. The battery module according to claim 11,
wherein the cover sidewall includes:
a step portion protruded from the base to support the end portion of the space forming rib; and
a slit forming flange spaced apart from the step portion to form the mount slit between the slit forming flange and the step portion and extended parallel to an extension direction of the mount slit.

13. The battery module according to claim 12,
wherein the step portion is extended toward the frame body, and
wherein the slit forming flange is extended toward the frame body less than the step portion.

14. The battery module according to claim 2,
wherein the base has a fuse accommodation hole for accommodating the fuse.

15. The battery module according to claim 14, further comprising:
a fuse coating configured to cover the fuse, and
wherein the fuse accommodation hole has a thickness that is equal to or larger than a sum of a thickness of the fuse and a thickness of the fuse coating.

16. A battery module comprising:
a busbar frame on which a busbar is mounted, the busbar frame including a frame body and a support rib extended from the frame body;
a substrate including a first substrate extension portion supported by the support rib, a second substrate extension portion extended parallel to the first substrate extension portion and located above the first substrate extension portion, and a substrate bending portion connecting the first substrate extension portion to the second substrate extension portion; and
a guide structure including a barrier portion located between the first substrate extension portion and the second substrate extension portion to prevent contact between the second substrate extension portion and the first substrate extension portion.

17. The battery module according to claim 16,
wherein the guide structure further includes a base having a first support surface supported by the first substrate extension portion.

18. The battery module according to claim 17,
wherein the base has a second support surface located on an opposite side to the first support surface, and configured to support the second substrate extension portion.

19. The battery module according to claim 18,
wherein the busbar frame further includes a space forming rib spaced apart from the support rib to define an internal space between the space forming rib and the support rib, the space forming rib being adjacent to the second substrate extension portion, and
wherein the second support surface is configured such that the second substrate extension portion is located between the second support surface and the space forming rib.

20. A battery module comprising:
a plurality of secondary batteries;
a busbar configured to be electrically connected to the plurality of secondary batteries;
a busbar frame configured to mount the busbar, and including a frame body, a support rib extended frontward from the frame body to support the busbar from above, and a space forming rib extended frontward from the frame body to form a space between the space forming rib and the support rib;
a substrate including a first substrate extension portion configured to be electrically connected to the busbar and supported by the support rib, and a second substrate extension portion adjacent to the space forming rib and facing the first substrate extension portion;
a fuse mounted on the second substrate extension portion, and protruded toward the first substrate extension portion; and
a guide structure including a barrier portion located between the first substrate extension portion and the second substrate extension portion to prevent contact between the fuse and the first substrate extension portion.
